(19) Europäisches Patentamt
European Patent Office
Office européen des brevets

(11) EP 4 523 520 A1

(12) EUROPEAN PATENT APPLICATION

(43) Date of publication:
**19.03.2025 Bulletin 2025/12**

(21) Application number: **24199639.6**

(22) Date of filing: **11.09.2024**

(51) International Patent Classification (IPC):
***A01G 18/20*** *(2018.01)* *A01G 18/22* *(2018.01)*

(52) Cooperative Patent Classification (CPC):
**A01G 18/20;** A01G 18/22

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.09.2023 JP 2023149790**

(71) Applicant: **SETOLAS Holdings, Inc.**
**Takamatsu-shi, Kagawa 760-0026 (JP)**

(72) Inventors:
- **HAMAMOTO, Yuya**
  **Sakaide-shi,, Kagawa 762-0012 (JP)**
- **NAKAMURA, Hajime**
  **Sakaide-shi,, Kagawa 762-0012 (JP)**

(74) Representative: **Vossius & Partner**
**Patentanwälte Rechtsanwälte mbB**
**Siebertstrasse 3**
**81675 München (DE)**

# (54) SUBSTANCE FOR MUSHROOM CULTURE MEDIUM AND METHOD FOR PRODUCING MUSHROOM CULTURE MEDIUM

(57) The disclosure provides an additive for a mushroom culture medium, the additive being capable of reducing a weighing error and improving the uniform mixing property of an antacid in a culture medium. The additive for a mushroom culture medium of the present disclosure includes an extender and an antacid.

Fig. 1

1
2
3
7
8
10a
4a
10b
5a
6a
5b
6b
9
4b

EP 4 523 520 A1

## Description

TECHNICAL FIELD

The present disclosure relates to an additive for a mushroom culture medium and a method for producing a mushroom culture medium.

BACKGROUND ART

Patent Document 1 describes a medium for mushroom culture prepared by molding a fossil seashell powder into granules having a diameter of about 1 to 5 mm, and adding the seashell fossil powder granules in an amount of 0.3 to 3 % based on the medium weight.

Patent Document

Patent Document 1: JP 2001-178264 A

SUMMARY

In the medium for mushroom culture described in Patent Document 1, there may be instances where it is not possible to obtain a fruit body yield in proportion to the addition amount of the shell fossil powder.

According to the study conducted by the present inventors, when the addition amount of an antacid in a mushroom culture medium is excessive, the mushroom yield increasing effect may be adversely affected. In addition, when the antacid is not sufficiently uniformly dispersed in the mushroom culture medium, the concentration of the antacid increases locally, and it may be difficult to obtain the mushroom yield increasing effect expected based on the addition amount of the antacid. The present disclosure is to provide an additive for a mushroom culture medium, the additive being capable of reducing a weighing error and improving uniform mixing property of an antacid in a culture medium.

A first embodiment of the present disclosure provides an additive for a mushroom culture medium, wherein the additive comprises an extender and an antacid.

In a second embodiment of the present disclosure, based on the first embodiment, the extendercomprises one or more selected from the group consisting of sawdust powder, corn cob meal, bagasse, beet waste, okara, coffee grounds, soybean hull, rice bran, wheat bran, and cottonseed hull.

In a third embodiment of the present disclosure, based on either one of the first embodiment and the second embodiment, the antacid comprises an aluminum compound.

In a fourth embodiment of the present disclosure, based on any one of the first to third embodiments, the antacid may further comprise one or more selected from a calcium compound, a magnesium compound, and a sodium compound.

In a fifth embodiment of the present disclosure, based on any one of the first to fourth embodiments, the content of aluminum atoms may be 60% by weight or less in terms of oxides based on the total weight of the antacid.

In a sixth embodiment of the present disclosure, based on any one of the first to fifth embodiments, the content of calcium atoms may be 60% by weight or less in terms of oxides based on the total weight of the antacid.

In a seventh embodiment of the present disclosure, based on any one of the first to sixth embodiments, the content of magnesium atoms in the antacid may be 30% by weight or less in terms of oxides based on the total weight of the antacid.

In an eighth embodiment of the present disclosure, based on any one of the first to seventh embodiments, the dry weight ratio of the extender to the antacid may be 99.5 : 0.5 to 10 : 90.

In a ninth embodiment of the present disclosure, based on any one of the first to eighth embodiments, the additive for a mushroom culture medium may have a repose angle of 50 degrees or less.

A tenth embodiment of the present disclosure provides a method for producing a mushroom culture medium, the method comprising the steps of:

mixing an extender and an antacid to obtain an additive for a mushroom culture medium; and
mixing the additive for a mushroom culture medium and a base material for a culture medium to obtain a mushroom culture medium.

Effects

The present disclosure provides an additive for a mushroom culture medium, which iscapable of reducing a weighing error of an antacid and improving the uniform mixing property of the antacid in a culture medium.

## BRIEF DESCRIPTION OF DRAWINGS

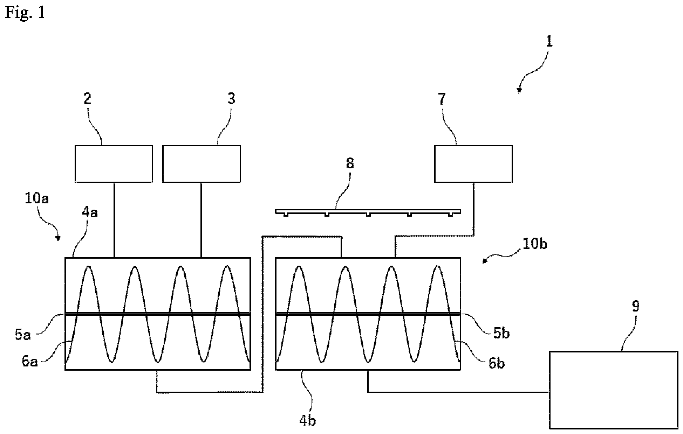

Fig. 1 is a schematic diagram for explaining a method for producing a mushroom culture medium.

## DETAILED DESCRIPTION

(First Embodiment: additive for mushroom culture medium)

The additive for a mushroom culture medium of the present embodiment comprises an extender and an antacid. The additive reduces a weighing error, and improves a uniform mixing property in a culture medium because the additive for a mushroom culture medium of the present embodiment comprises an extender and an antacid. Although the present disclosure should not be construed as being limited to a particular theory, the reason the additive for a mushroom culture medium of the present disclosure exerts such an effect is considered as follows.

According to a study conducted by the present inventors, a difference in fluidity between the antacid and the base material for a culture medium may affect the uniform mixing property when mixing the antacid and the base material for a culture medium. However, the extender and the antacid are found to be uniformly dispersed when the antacid and the extender are mixed in advance, and this provides an additive for a mushroom culture medium having high fluidity. In addition, a weighing error can also be reduced because the additive for a mushroom culture medium comprises an extender and an antacid. As a result, an additive for a mushroom culture medium has been realized with the capability of reducing a weighing error and improving the uniform mixing property in the culture medium.

The extender may be any material that does not adversely affect the antacid and the growth of a mushroom fruit body. A case where the growth of a mushroom fruit body is adversely affected may include, for example, a case where the yield of a mushroom fruit body decreases.

In one aspect, it is preferable that the extender is one that allows none of aluminum, magnesium, and calcium to be eluted even when the extender comes into contact with an acid that can be produced by a mushroom. This configuration allows the effect of increasing the yield of a mushroom fruit body by the antacid to be appropriately exhibited.

In such an aspect, specifically, preferable extender is the one where the total elution amount of aluminum, magnesium, and calcium is 300 mg/100 g or less per 100 g of the extender when a mixed liquid obtained by adding 85 parts by weight of ion-exchanged water to 15 parts by weight of the extender is shaken at 160 rpm/min for 1 hour. The elution amount may be more preferably 0 mg/100 g or more and 1000 mg/100 g or less, and still more preferably 0 mg/100 g or more and 550 mg/100 g or less.

In the above case, the elution amount of calcium is 0 mg/100 g or more and 3000 mg/100 g or less, and the preferred upper limit is 1000 mg/100 g or less, and more preferably 550 mg/100 g or less.

In the above case, the elution amount of magnesium is 0 mg/100 g or more and 3000 mg/100 g or less, and the preferred upper limit is 1000 mg/100 g or less, and more preferably 550 mg/100 g or less.

In the above case, the elution amount of aluminum is 0 mg/100 g or more and 1000 mg/100 g or less, and the preferred upper limit is 500 mg/100 g or less, and more preferably 100 mg/100 g or less.

Within such a range, the effect of the antacid can be reliably exhibited.

In another aspect, the extender may preferably comprise one or more selected from the group consisting of sawdust powder, corn cob meal, bagasse, beet waste, okara, coffee grounds, soybean hull, rice bran, wheat bran, and cottonseed hull, and more preferably may comprise sawdust powder.

In such an aspect, the total content of the sawdust powder, corn cob meal, bagasse, beet waste, okara, coffee grounds, soybean hull, rice bran, wheat bran, and cottonseed hull in 100 parts by weight of the total amount of the extender may be preferably 80 parts by weight or more and 100 parts by weight or less, more preferably 90 parts by weight or more and 100 parts by weight or less, and still more preferably 95 parts by weight or more and 100 parts by weight or less.

In the present disclosure, the content may be a content based on dry weight. The dry weight in the present disclosure means a weight measured while avoiding moisture absorption immediately after the object to be measured is dried at 105°C for 3 hours.

The content of the extender may be preferably 10% by weight or more and 99.5% by weight or less, more preferably 13% by weight or more and 99.2% by weight or less, still more preferably 17% by weight or more and 99% by weight or less, further preferably 33% by weight or more and 98.4% by weight or less, and still further preferably 50% by weight or more and 98% by weight or less in 100% by weight of the total amount of the additive for a mushroom culture medium.

The antacid means a compound capable of exhibiting a function of neutralizing an acid. In the process of culturing a mushroom, an organic acid such as oxalic acid can be generated from a mushroom fungus. The antacid can promote the growth of a mushroom fruit body by neutralizing the organic acid.

In one aspect, the antacid may be such a compound where the pH of a 10% by weight aqueous dispersion of the antacid is higher than the pH of a 10% by weight aqueous dispersion of the nutritional agent described below. The pH of the 10% by weight aqueous dispersion of the antacid may be, for example, 5.5 or more and 13.0 or less, or alternatively 6.0 or more and 12.0 or less.

In one aspect, the antacid may preferably comprise an aluminum compound. In a more preferred aspect, the antacid may comprise an aluminum compound and one or more selected from a calcium compound, a magnesium compound, and a sodium compound. In a further preferred aspect, the antacid may comprise an aluminum compound and one or more selected from a calcium compound and a magnesium compound.

The aluminum compound, the calcium compound, the magnesium compound, and the sodium compound may be either natural products or synthetic products. These compounds may also be hydrates. The form of these compounds may be, for example, gel, glass, porous body, powder, or particle. In a specific example, the antacid may comprise 2 or more, 3 or more, or 4 or more types of those compounds. In a more specific example, the antacid may comprise 1 to 5, preferably 2 to 5, for example, 3 types of those compounds.

In one aspect, preferably, the aluminum compound may comprise one or more selected from aluminum hydroxide, aluminum silicate, magnesium aluminometasilicate, calcium aluminosilicate, calcium aluminosilicate glass, calcium aluminate hydrate, dawsonite, zeolite, hydrocalumite, and hydrotalcite. More preferably, the aluminum compound may comprise one or more selected from aluminum hydroxide and aluminum silicate. More preferably, the aluminum compound may comprise aluminum hydroxide.

In one aspect, preferably, the magnesium compound may comprise one or more selected from magnesium carbonate, magnesium hydroxide, magnesium oxide, magnesium silicate, magnesium aluminometasilicate, and hydrotalcite. More preferably, the magnesium compound may comprise one or more selected from magnesium silicate and magnesium hydroxide. More preferably, the magnesium compound may comprise magnesium hydroxide.

In one aspect, preferably, the sodium compound may comprise one or more selected from sodium hydrogen carbonate, sodium alginate, and dawsonite.

In one aspect, preferably, the calcium compound may comprise one or more selected from calcium carbonate, calcium hydroxide, calcium silicate, calcium aluminosilicate, calcium aluminosilicate glass, calcium aluminate hydrate, and hydrocalumite. More preferably, the calcium compound may comprise calcium hydroxide.

In one aspect, the total content of the aluminum compound, the calcium compound, the magnesium compound, and the sodium compound may be preferably 80% by weight or more and 100% by weight or less, more preferably 90% by weight or more and 100% by weight or less, and still more preferably 95% by weight or more and 100% by weight or less, based on 100% by weight of the total amount of the antacid.

In one aspect, the antacid may preferably comprise an aluminum compound, a calcium compound, and a magnesium compound. More preferably, the antacid may comprise one or more selected from hydroxides, silicates, metasilicates, carbonates, double hydroxides, carbonate hydroxides, oxides, hydrogen carbonates, and alginates of aluminum, calcium, or magnesium, and further preferably may comprise aluminum hydroxide, calcium hydroxide, and magnesium hydroxide.

In one aspect, the content of aluminum atoms in terms of an oxide ($Al_2O_3$) in the antacid is preferably 60% by weight or less, more preferably 5% by weight or more and 58% by weight or less, still more preferably 10% by weight or more and 50% by weight or less, and further preferably 15% by weight or more and 40% by weight or less based on the total weight of the antacid. The content may be preferably 5% by weight or more, more preferably 10% by weight or more, and still more preferably 15% by weight or more. The content may be preferably 50% by weight or less, more preferably 45% by weight or less, and still more preferably 40% by weight or less.

When the additive for a mushroom culture medium is used for shimeji mushrooms, the content of aluminum atoms in terms of an oxide ($Al_2O_3$) in the antacid may be preferably 1% by weight or more and 60% by weight or less, and more preferably 1% by weight or more and 30% by weight or less based on the total weight of the antacid.

When the additive for a mushroom culture medium is used for shiitake mushrooms, the content of aluminum atoms in terms of an oxide ($Al_2O_3$) in the antacid may be preferably 1% by weight or more and 60% by weight or less, and more preferably 1% by weight or more and 50% by weight or less based on the total weight of the antacid.

When the additive for a mushroom culture medium is used for button mushrooms, the content of aluminum atoms in terms of an oxide ($Al_2O_3$) in the antacid may be preferably 1% by weight or more and 60% by weight or less, and more preferably 1% by weight or more and 50% by weight or less based on the total weight of the antacid.

When the additive for a mushroom culture medium is used for maitake, the content of aluminum atoms in terms of an oxide ($Al_2O_3$) in the antacid may be preferably 1% by weight or more and 60% by weight or less, and more preferably 1% by weight or more and 58% by weight or less based on the total weight of the antacid.

In the present disclosure, the content of a specific atom in terms of an oxide based on the total weight of the antacid means a value obtained by dividing the weight-based content of a compound containing the specific atom by the molecular weight of the compound containing the specific atom to obtain a quotient, and then multiplying the quotient by the molecular weight of an oxide of the specific atom, where the total amount of the antacid is 100% by weight. When the specific atom is an aluminum atom, an aluminum compound corresponds to the aforementioned compound containing the specific atom, and $Al_2O_3$ corresponds to the oxide. Similarly, when the specific atom is a calcium atom, a calcium compound corresponds to the aforementioned compound containing the specific atom, and CaO corresponds to the oxide. When the specific atom is a magnesium atom, a magnesium compound corresponds to the aforementioned compound containing the specific atom, and MgO corresponds to the oxide.

In one aspect, the content of calcium atoms in terms of an oxide (CaO) in the antacid is preferably 60% by weight or less, more preferably 1% by weight or more and 50% by weight or less, still more preferably 5% by weight or more and 35% by weight or less, and further preferably 10% by weight or more and 30% by weight or less based on the total weight of the antacid. The content may be preferably 1% by weight or more, more preferably 5% by weight or more, still more preferably 10% by weight or more, and further preferably 15% by weight or more. The content may be preferably 60% by weight or less, more preferably 50% by weight or less, still more preferably 35% by weight or less, and further preferably 30% by weight or less.

When the additive for a mushroom culture medium is used for shimeji mushrooms, the content of calcium atoms in terms of an oxide (CaO) in the antacid may be preferably 1% by weight or more and 60% by weight or less, and more preferably 1% by weight or more and 55% by weight or less based on the total weight of the antacid.

When the additive for a mushroom culture medium is used for shiitake mushrooms, the content of calcium atoms in terms of an oxide (CaO) in the antacid may be preferably 1% by weight or more and 30% by weight or less, and more preferably 1% by weight or more and 20% by weight or less based on the total weight of the antacid.

When the additive for a mushroom culture medium is used for button mushrooms, the content of calcium atoms in terms of an oxide (CaO) in the antacid may be preferably 0% by weight or more and 30% by weight or less, and more preferably 0% by weight or more and 20% by weight or less based on the total weight of the antacid.

When the additive for a mushroom culture medium is used for maitake, the content of calcium atoms in terms of an oxide (CaO) in the antacid may be preferably 0% by weight or more and 50% by weight or less, and more preferably 0% by weight or more and 48% by weight or less based on the total weight of the antacid.

In one aspect, the content of magnesium atoms in terms of an oxide (MgO) in the antacid is preferably 30% by weight or less, more preferably 1% by weight or more and 20% by weight or less, and still more preferably 2% by weight or more and 16% by weight or less based on the total weight of the antacid. The content may be preferably 1% by weight or more, more preferably 2% by weight or more, still more preferably 4% by weight or more, and further preferably 5% by weight or more. The content may be preferably 30% by weight or less, more preferably 20% by weight or less, still more preferably 16% by weight or less, and further preferably 14% by weight or less.

When the additive for a mushroom culture medium is used for shimeji mushrooms, the content of magnesium atoms in terms of an oxide (MgO) in the antacid may be preferably 0% by weight or more and 30% by weight or less, and more preferably 0% by weight or more and 20% by weight or less based on the total weight of the antacid.

When the additive for a mushroom culture medium is used for shiitake mushrooms, the content of magnesium atoms in terms of an oxide (MgO) in the antacid may be preferably 0% by weight or more and 30% by weight or less, and more preferably 0% by weight or more and 20% by weight or less based on the total weight of the antacid.

When the additive for a mushroom culture medium is used for button mushrooms, the content of magnesium atoms in terms of an oxide (MgO) in the antacid may be preferably 0% by weight or more and 30% by weight or less, and more preferably 0% by weight or more and 20% by weight or less based on the total weight of the antacid.

When the additive for a mushroom culture medium is used for maitake, the content of magnesium atoms in terms of an oxide (MgO) in the antacid may be preferably 0% by weight or more and 30% by weight or less, and more preferably 0% by weight or more and 20% by weight or less based on the total weight of the antacid.

The dry weight ratio of the extender to the antacid (extender : antacid) may be preferably 99.5 : 0.5 to 10 : 90, more preferably 99.2 : 0.8 to 13 : 87, still more preferably 99 : 1 to 17 : 83, further preferably 98.4 : 1.6 to 33 : 67, and still further preferably 98 : 2 to 50 : 50. When the weight ratio of the extender to the antacid is in such a range, a weighing error of the raw material for an antacid can be reduced, and the uniform mixing property in a culture medium can be improved.

In the present disclosure, a dry weight ratio means a ratio of dry weights of two or more materials.

The total weight of the extender and the antacid in 100% by weight of the total amount of the additive for a mushroom culture medium may be preferably 80% by weight or more and 100% by weight or less, more preferably 90% by weight or more and 100% by weight or less, and still more preferably 95% by weight or more and 100% by weight or less.

The additive for a mushroom culture medium of the present disclosure may comprise other components in addition to the extender and the antacid. Examples of such components comprise a nutritional agent.

In one embodiment, the nutritional agent means a compound containing one or more selected from a potassium atom, a phosphorus atom, a nitrogen atom, and a sulfur atom and being capable of exhibiting a function of promoting the growth of a mushroom fruit body.

In one aspect, the pH of a 10% by mass aqueous dispersion of the nutritional agent may be, for example, 2.0 or more and less than 5.5, or 3.0 or more and 5.0 or less.

In one embodiment, the nutritional agent may comprise one or more selected from among a phosphoric acid compound, a nitric acid compound, and a sulfuric acid compound. These compounds may be natural products or synthetic products. These compounds may also be hydrates. The form of these compounds may be, for example, gel, glass, porous body, powder, or particle. In a specific example, the nutritional agent may comprise 2 or more, 3 or more, or 4 or more types of those compounds. In a more specific example, the nutritional agent may comprise 1 to 5 types of those compounds. The nutritional agent to be used may be only one compound.

In one embodiment, the phosphoric acid compound may comprise one or more selected from calcium monohydrogen phosphate, calcium dihydrogen phosphate, calcium phosphate, octacalcium phosphate, magnesium phosphate, magnesium monohydrogen phosphate, magnesium dihydrogen phosphate, aluminum phosphate, and hydroxyapatite. Preferably, the phosphoric acid compound may comprise one or more selected from calcium monohydrogen phosphate and calcium dihydrogen phosphate, and more preferably may comprise calcium dihydrogen phosphate.

In one embodiment, the nitric acid compound may comprise one or more selected from calcium nitrate, magnesium nitrate, and aluminum nitrate.

In one embodiment, the sulfuric acid compound may comprise one or more selected from calcium sulfate, magnesium sulfate, and aluminum sulfate.

In one embodiment, the nutritional agent may preferably comprise a phosphoric acid compound, may preferably comprise one or more selected from monohydrogen phosphate compounds, such as calcium monohydrogen phosphate and magnesium monohydrogen phosphate; and dihydrogen phosphate compounds, such as calcium dihydrogen phosphate and magnesium dihydrogen phosphate, may more preferably comprise a dihydrogen phosphate compound, and may still more preferably comprise calcium dihydrogen phosphate.

In one embodiment, the content of the phosphoric acid compound may be preferably 80% by weight or more and 100% by weight or less, more preferably 90% by weight or more and 100% by weight or less, and still more preferably 95% by weight or more and 100% by weight or less in 100 parts by weight of the nutritional agent.

The additive for a mushroom culture medium of the present disclosure comprises the extender, and may have good fluidity. Therefore, the additive is favorable in uniform mixing property with the base material for a culture medium described below.

In one aspect, the repose angle of the additive for a mushroom culture medium of the present disclosure may be preferably 25 degrees or more and 50 degrees or less, more preferably 27 degrees or more and 48 degrees or less, and still more preferably 30 degrees or more and 46 degrees or less. When the repose angle of the additive for a mushroom culture medium falls within such a range, the fluidity of the additive for a mushroom culture medium is favorable, and uniformly mixing the additive for a mushroom culture medium and the base material for a culture medium may become manageable.

The repose angle can typically be understood as an angle formed by a powder layer surface with the horizontal plane when a powder is accumulated in a gravitational field to form a free surface. Therefore, the smaller the repose angle of the additive for a mushroom culture medium is, the higher the fluidity of the additive for a mushroom culture medium is indicated to be. In the present disclosure, the repose angle can be measured by a deposition angle formed when the additive for a mushroom culture medium is naturally dropped from a height of 50 mm onto a lower dish having a diameter of 80 mm.

In one aspect, the ratio of the repose angle of the additive for a mushroom culture medium of the present disclosure to the repose angle of the weight material (the repose angle of the additive for a mushroom culture medium/the repose angle of the weight material) may be preferably 0.95 times or more and 1.1 times or less, more preferably 0.98 times or more and 1.08 times or less, and still more preferably 1 time or more and 1.05 times or less. When the ratio of the repose angles is in such ranges, the fluidity of the additive for a mushroom culture medium is favorable, and uniformly mixing the additive for a mushroom culture medium and the base material for a culture medium may become manageable.

In one aspect, the content of the moisture contained in the additive for a mushroom culture medium of the present disclosure may be preferably 0% by weight or more and 30% by weight or less, more preferably 0% by weight or more and 25% by weight or less, and still more preferably 0% by weight or more and 20% by weight or less in 100% by weight of the total amount of the additive for a mushroom culture medium. When the moisture content is within the above range, lump generation can be inhibited, and when mixing the additive for a mushroom culture medium and the base material for a mushroom culture medium, the uniformity can be further improved.

In the present disclosure, the moisture content can be calculated from the weight loss amount obtained by drying the additive for a mushroom culture medium at 105°C for 3 hours, and specifically can be calculated by the following formula.

Moisture content (% by weight) = (weight before drying - weight after drying)/weight before drying × 100

In one aspect, the bulk specific volume of the additive for a mushroom culture medium of the present disclosure may be 2 $cm^3$/g or more and 10 $cm^3$/g or less, more preferably 3 $cm^3$/g or more and 9 $cm^3$/g or less, and still more preferably 4 $cm^3$/g or more and 8 $cm^3$/g or less. When the bulk specific volume is within the above range, the weighing error of the raw material can be reduced.

In the present disclosure, the bulk specific volume can be measured based on a volume when 10 g of a sample is gently put into a 100 mL graduated cylinder.

The additive for a mushroom culture medium of the present disclosure can be used for culturing various types of mushrooms. The additive for a mushroom culture medium of the present disclosure can be used for culturing shiitake mushrooms, button mushrooms, enokitake mushrooms, shimeji mushrooms, nameko mushrooms, maitake, king oyster mushrooms, lion's mane mushrooms, or oyster mushrooms, but the application target is not limited thereto.

(Second embodiment: method for producing mushroom culture medium)

A method for producing a mushroom culture medium is also included in the technical scope of the present disclosure.

The method for producing a mushroom culture medium of the present disclosure comprises the steps of:

mixing an extender and an antacid to obtain an additive for a mushroom culture medium; and
mixing the additive for a mushroom culture medium and a base material for a culture medium to obtain a mushroom culture medium.

Hereinafter, the step of mixing an extender and an antacid to obtain an additive for a mushroom culture medium is also referred to as a first mixing step, and the step of mixing the additive for a mushroom culture medium and a base material for a culture medium to obtain a mushroom culture medium is also referred to as a second mixing step.

The extender has the same meaning as the extender in the first embodiment. The antacid has the same meaning as the antacid in the first embodiment. All the matters described in the first embodiment can be applied to the present embodiment.

In the first mixing step, an extender and an antacid are mixed to afford an additive for a mushroom culture medium. In the production method of the present disclosure, an additive for a mushroom culture medium having high fluidity can be obtained by mixing an extender and an antacid. Producing a mushroom culture medium by further mixing such an additive for a mushroom culture medium with a base material for a culture medium can reduce the weighing error of a raw material for an antacid and improve the uniform mixing property in the culture medium.

The content of the extender may be preferably 10% by weight or more and 99.5% by weight or less, more preferably 13% by weight or more and 99.2% by weight or less, still more preferably 17% by weight or more and 99% by weight or less, further preferably 33% by weight or more and 98.4% by weight or less, and still further preferably 50% by weight or more and 98% by weight or less in 100% by weight of the total amount of the extender and the antacid. The content of the extender is preferably 10% by weight or more, more preferably 13% by weight or more, still more preferably 17% by weight or more, further preferably 33% by weight or more, and still further preferably 50% by weight or more, and may be preferably 99.99% by weight or less, more preferably 99.8% by weight or less, still more preferably 99.5% by weight or less, further preferably 99% by weight or less, and still further preferably 95% by weight or less in 100% by weight of the total amount of the additive for a mushroom culture medium.

The weight ratio of the extender to the antacid (extender : antacid) may be preferably 99.5 : 0.5 to 10 : 90, more preferably 99.2 : 0.8 to 13 : 87, still more preferably 99 : 1 to 17 : 83, further preferably 98.4 : 1.6 to 33 : 67, and still further preferably 98 : 2 to 50 : 50. When the weight ratio of the extender to the antacid is in such a range, a weighing error of the additive for a mushroom culture medium can be reduced, and the uniform mixing property in a culture medium can be improved.

The mixing in the first mixing step can be carried out by the means used in the production of a mushroom culture medium. Typically, examples of the mixing means include, but are not limited to, shaking and stirring. In one aspect, stirring is preferable as the mixing means. The employment of stirring as the mixing means ensures the proper mixing of the materials, and can improve the uniformity of a mushroom culture medium to be obtained.

The stirring can be typically performed using a stirring device equipped with a stirring blade. Examples of the stirring blade include a helical ribbon blade and a screw.

The temperature in the first mixing step may be preferably 0°C or more and 60°C or less, more preferably 0°C or more and 40°C or less, and still more preferably 0°C or more and 45°C or less. The mixing time in the first mixing step may be preferably 1 minute or more and 2 hours or less, more preferably 1 minute or more and 1 hour or less, and still more preferably 1 minute or more and 30 minutes or less.

In the second mixing step, the additive for a mushroom culture medium and a base material for a culture medium are mixed to afford a mushroom culture medium. Since the additive for a mushroom culture medium has improved fluidity, a weighing error can be reduced and the uniform mixing property can be improved for the components contained in a culture medium, typically, an antacid component.

The base material for a culture medium may be appropriately selected according to the type of the mushroom to be cultured by those skilled in the art and culture conditions. In one aspect, the base material for a mushroom culture medium may comprise a base such as sawdust powder (for example, Japanese cedar sawdust powder), corn cob meal, bagasse, or beet waste, and a nutritional agent such as rice bran, wheat bran, cottonseed hull, okara, coffee grounds, and soybean hull.

The composition of the extender and the composition of the base material for a culture medium may be either the same or different.

The amount of the additive for a mushroom culture medium may be preferably 10 parts by weight or more and 90 parts by weight or less, more preferably 20 parts by weight or more and 80 parts by weight or less, and still more preferably 30 parts by weight or more and 70 parts by weight or less based on 100 parts by weight of the total amount of the base material for a culture medium.

The mixing in the second mixing step can be carried out by the same means as the means described as the mixing means in the first mixing step.

In the second mixing step, water may be allowed to coexist when the additive for a mushroom culture medium and the base material for a culture medium are mixed. Such coexistence of water can be performed, for example, by feeding water to a mixture of the additive for a mushroom culture medium and the base material for a culture medium. The method for feeding water is not particularly limited, and may be performed typically by spraying water.

The temperature in the second mixing step may be preferably 0°C or more and 60°C or less, more preferably 0°C or more and 40°C or less, and still more preferably 0°C or more and 45°C or less. The mixing time in the second mixing step may be preferably 1 minute or more and 2 hours or less, more preferably 1 minute or more and 1 hour or less, and still more preferably 1 minute or more and 30 minutes or less.

Hereinafter, the present embodiment will be described more specifically on the basis of the mushroom culture medium production system schematically illustrated in Fig. 1.

In the mushroom culture medium production system illustrated in Fig. 1, first, an extender stored in an extender tank 2 and an antacid stored in an antacid tank 3 are fed into a first stirring tub 4a of a first stirring device 10a. The extender and the antacid fed are stirred with a first stirring blade 6a fixed to a first stirring shaft Sa, and an additive for a mushroom culture medium is thereby produced. The additive for a mushroom culture medium is collected from the bottom of the first stirring tub 4a and transported to a second stirring device 10b.

Next, the additive for a mushroom culture medium produced in the first stirring device 10a and a base material for a culture medium stored in a tank 7 for a base material for a culture medium are fed into a second stirring tub 4b of the second stirring device 10b. The additive for a mushroom culture medium and the base material for a culture medium fed are stirred with a second stirring blade 6b fixed to a second stirring shaft 5b. When the additive for a mushroom culture medium and the base material for a culture medium are stirred, water may be sprayed from a water sprinkler 8 to the mixture. A mushroom culture medium is produced by stirring the additive for a mushroom culture medium and the base material for a culture medium. The resulting mushroom culture medium is collected from the bottom of the second stirring tub 4b and stored in a mushroom culture medium collecting container 9.

In Fig. 1, the first stirring device 10a and the second stirring device 10b are different from each other, but are not limited to this configuration, and the same stirring device may be used as the first stirring device 10a and the second stirring device 10b. Such an aspect can be implemented, for example, by connecting the tank 7 for a base material for a culture medium and the first stirring device 10a. Specifically, after the additive for a mushroom culture medium is produced in the first stirring device 10a, the base material for a culture medium stored in the tank 7 for a base material for a culture medium is further fed into the first stirring device 10a and stirred, whereby the mushroom culture medium can be produced.

In the present embodiment, the extender, the antacid, and the base material for a culture medium are stored in the extender tank 2, the antacid tank 3, and the tank 7 for a base material for a culture medium, respectively, but the present disclosure is not limited to this configuration. One or more selected from the extender and the antacid may be directly fed into the first stirring tub 4a without passing through the extender tank 2 and/or the antacid tank 3. Further, the base material for a culture medium may be directly fed into the second stirring tub 4b without passing through the tank 7 for a base material for a culture medium .

The mushroom culture medium collected may be stored as received or may be filled in an individual container.

The present disclosure provides an additive for a mushroom culture medium, the additive being capable of reducing a weighing error and improving the uniform mixing property of the antacid in a culture medium. The additive for a mushroom culture medium of the present disclosure can be used for culturing various types of mushrooms. In one aspect, the additive for a mushroom culture medium of the present disclosure can be used for culturing shiitake mushrooms, button mushrooms, enokitake mushrooms, shimeji mushrooms, nameko mushrooms, button mushrooms, maitake, king oyster mushrooms, lion's mane mushrooms, or oyster mushrooms.

## Examples

The present invention will be described hereafter in more detail by way of examples, to which the present invention is not intended to be limited.

(Example 1)

An antacid (hereinafter, also referred to as "antacid 1") was prepared by mixing 18 parts by weight of aluminum hydroxide, 65 parts by weight of calcium hydroxide, and 17 parts by weight of magnesium hydroxide. Subsequently, 95 parts by weight of Japanese cedar sawdust powder as an extender and 5 parts by weight of the antacid were put in a polypropylene vessel and sufficiently stirred, affording an additive for a mushroom culture medium of the present disclosure.

Subsequently, 50 parts by weight of the additive for a mushroom culture medium of the present disclosure and 50 parts by weight of Japanese cedar sawdust powder as a base material for a culture medium were put in a polypropylene vessel, and shaken for 1 minute under the condition of 220 times per minute, affording a mushroom culture medium of the present disclosure. In this example, the Japanese cedar sawdust powder was used for convenience of the measurement of the concentrations of aluminum, calcium, and magnesium, and the base material for a culture medium is not limited to the Japanese cedar sawdust powder.

(Bulk specific volume)

A sample was gently poured into a 100 mL graduated cylinder, and the bulk specific volume was measured. As the sample, the antacid 1, Japanese cedar sawdust powder, and the additive for a mushroom culture medium obtained in Example 1 were used.

[Table 1]

| | Antacid 1 | Japanese cedar sawdust powder | Additive for mushroom culture medium |
|---|---|---|---|
| Bulk specific volume | 3 $cm^3/g$ | 6.3 $cm^3/g$ | 6.1 $cm^3/g$ |

(Measurement of moisture content)

A clean weighing bottle was prepared, and only the weighing bottle was weighed. Next, about 1.0 g of a sample was weighed in the weighing bottle, and the total weight of the weighing bottle and the sample (before drying) was measured. The weighing bottle was placed in a dryer with the lid of the weighing bottle open, and the sample was dried at 105°C for 3 hours. After drying, the lid of the weighing bottle was closed, and the sample was naturally cooled to room temperature in a desiccator. After the temperature had dropped sufficiently, the total weight of the weighing bottle and the sample (after drying) was measured. The drying loss (moisture content) was calculated on the basis of the following calculation formula. As the sample, the antacid 1, Japanese cedar sawdust powder, and the additive for a mushroom culture medium obtained in Example 1 were used.

[Expression 1]

$$\text{Drying loss (105°C, 3hr) (\% by weight)} = \frac{[\text{weighing bottle + sample (before drying) (g)}] - [\text{weighing bottle + sample (after drying) (g)}]}{[\text{weighing bottle + sample (before drying) (g)}] - [\text{weighing bottle alone (g)}]} \times 100$$

[Table 2]

| | Antacid 1 | Japanese cedar sawdust powder | Additive for mushroom culture medium |
|---|---|---|---|
| Moisture content (Drying loss (105°C, 3 hr)) | 0.80% by weight | 19.30% by weight | 15.60% by weight |

(Measurement of repose angle)

As an instrument for measuring a repose angle, a hanging/electromagnetic vibration type repose angle tester TYPE AOR-14 manufactured by Tsutsui Scientific Instruments Co., Ltd. was used, the deposition angle formed when an additive for a mushroom culture medium was naturally dropped from a height of 50 mm onto a lower dish having a diameter of 80 mm was measured. The antacid agent 1, Japanese cedar sawdust powder, and the additive for a mushroom culture medium obtained in Example 1 were used as samples, and the ratio of the repose angle of the additive for a mushroom culture medium to the repose angle of Japanese cedar sawdust powder (repose angle of additive for mushroom culture medium/repose angle of Japanese cedar sawdust powder) was calculated.

[Table 3]

| | Antacid 1 | Japanese cedar sawdust powder | Additive for mushroom culture medium | Ratio of repose angles |
|---|---|---|---|---|
| Repose angle | 49.3° | 43.1° | 44.9° | 1.04 |

(Comparative Example 1)

A culture medium of the comparative example was obtained by putting 2.5 parts by weight of the antacid 1 and 97.5 parts by weight of Japanese cedar sawdust powder as a base material for a culture medium in a polypropylene vessel, followed by shaking for 1 minute under the condition of 220 times per minute.

(Measurement of concentration)

In Example 1 and Comparative Example 1, 0.5 g of each of the mushroom culture medium of Example 1 or the culture medium of Comparative Example 1 was sampled from the upper part, the middle part, and the bottom part of the polypropylene vessel after shaking, dissolved by the microwave method, and diluted to 50 mL. The obtained solution was diluted to a concentration measurable by high-frequency inductively coupled plasma emission spectrometry (ICP emission spectrometry), and the concentrations of aluminum, calcium, and magnesium were measured. The measured concentrations were converted into the contents in terms of oxides in the additive for a mushroom culture medium in Example 1, and were converted into the contents in terms of oxides in the antacid 1 in Comparative Example 1, and the uniform dispersibility was evaluated.

The results are shown in Table 1. In Table 1, $Al_2O_3$ represents the content of aluminum in terms of the oxide, CaO represents the content of calcium in terms of the oxide, and MgO represents the content of magnesium in terms of the oxide.

[Table 4]

| | | | | Example 1 | Comparative Example 1 |
|---|---|---|---|---|---|
| Mushroom activators | Extender | Japanese cedar sawdust powder | wt % | 47.5 | |
| | Antacid | Antacid 1 | wt % | 2.5 | |
| Antacid | Antacid 1 | | wt % | | 2.5 |
| Culture medium base | Japanese cedar sawdust powder | | wt % | 50.0 | 97.5 |
| Evaluation results | $Al_2O_3$ | Upper part | wt % | 0.211 | 0.136 |
| | | Middle part | wt % | 0.240 | 0.258 |
| | | Bottom part | wt % | 0.236 | 0.317 |
| | CaO | Upper part | wt % | 0.944 | 0.810 |
| | | Middle part | wt % | 1.172 | 1.360 |
| | | Bottom part | wt % | 1.157 | 1.753 |
| | MgO | Upper part | wt % | 0.259 | 0.220 |
| | | Middle part | wt % | 0.323 | 0.343 |
| | | Bottom part | wt % | 0.320 | 0.439 |

When 2.5 parts by weight of the antacid 1 and 97.5 parts by weight of Japanese cedar sawdust powder are uniformly mixed, the theoretical values of the content of each element in terms of an oxide are 0.243% by weight for aluminum (in terms of $Al_2O_3$), 1.242% by weight for calcium (in terms of CaO), and 0.296% by weight for magnesium (in terms of MgO).

Example 1 is the example of the present disclosure, and it was confirmed that the content of each element was almost the same as the theoretical value even when the mushroom culture medium was sampled at any of the upper part, the middle part, and the bottom part. This supports the effect that the additive for a mushroom culture medium of the present disclosure can reduce a weighing error and improve the uniform mixing property in a mushroom culture medium.

Comparative Example 1 is an example in which the antacid and the base material for a culture medium were directly mixed, and it was confirmed that the contents of all of aluminum, calcium, and magnesium were low at the upper part of the mixing vessel, and the contents of all of aluminum, calcium, and magnesium were high at the bottom part of the mixing vessel. This affirms that the uniform mixing property in a mushroom culture medium is not sufficient, and a weighing error may also occur when an antacid and a base material for a culture medium are directly mixed.

The present disclosure provides an additive for a mushroom culture medium, the additive being capable of reducing a weighing error and improving the uniform mixing property of the antacid in a culture medium. The additive for a mushroom culture medium of the present disclosure can be used for culturing various types of mushrooms. In one aspect, the additive for a mushroom culture medium of the present disclosure can be used for culturing shiitake mushrooms, button mushrooms, enokitake mushrooms, shimeji mushrooms, nameko mushrooms, maitake, king oyster mushrooms, lion’s mane mushrooms, or oyster mushrooms.

explanation of reference numerals

| | |
|---|---|
| 1 | mushroom culture medium production system |
| 2 | extender tank |
| 3 | antacid tank |
| 4a | first stirring tub |
| 4b | second stirring tub |
| 5a | first stirring shaft |
| 5b | second stirring shaft |
| 6a | first stirring blade |
| 6b | second stirring blade |
| 7 | tank for a base material for a culture medium |
| 8 | water sprinkler |
| 9 | mushroom culture medium collecting container |
| 10a | first stirring device |
| 10b | second stirring device |

## Claims

**1.** An additive for a mushroom culture medium, the additive comprising an extender and an antacid.

**2.** The additive for a mushroom culture medium according to claim 1, wherein the extender comprises one or more selected from the group consisting of sawdust powder, corn cob meal, bagasse, beet waste, okara, coffee grounds, soybean hull, rice bran, wheat bran, and cottonseed hull.

**3.** The additive for a mushroom culture medium according to claim 1, wherein the antacid comprises an aluminum compound.

**4.** The additive for a mushroom culture medium according to claim 3, wherein the antacid further comprises one or more selected from a calcium compound, a magnesium compound, and a sodium compound.

**5.** The additive for a mushroom culture medium according to claim 3, wherein the content of aluminum atoms in the antacid is 60% by weight or less in terms of oxides based on the total weight of the antacid.

**6.** The additive for a mushroom culture medium according to claim 4, wherein the content of calcium atoms in the antacid is 60% by weight or less in terms of oxides based on the total weight of the antacid.

**7.** The additive for a mushroom culture medium according to claim 4, wherein the content of magnesium atoms in the antacid is 30% by weight or less in terms of oxides based on the total weight of the antacid.

**8.** The additive for a mushroom culture medium according to any one of claims 1 to 7, wherein a dry weight ratio of the extender to the antacid is 99.5 : 0.5 to 10 : 90.

**9.** The additive for a mushroom culture medium according to claim 1, wherein the additive has a repose angle of 50 degrees or less.

**10.** A method for producing a mushroom culture medium, the method comprising the steps of:

mixing an extender and an antacid to obtain an additive for a mushroom culture medium; and
mixing the additive for a mushroom culture medium and a base material for a culture medium to obtain a mushroom culture medium.

Fig. 1

1
2
3
7
8
10a
4a
10b
9
5a
6a
5b
6b
4b

Europäisches
Patentamt
European
Patent Office
Office européen
des brevets

# EUROPEAN SEARCH REPORT

Application Number
EP 24 19 9639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | CN 114 258 264 A (COORDINATED CHEMICAL IND JOINT STOCK AGENCY)<br>29 March 2022 (2022-03-29)<br>* page 3 paragraphs 2-5<br>page 5 paragraphs 7-8;<br>claim 7; example 1 *<br>----- | 1-9<br>10 | INV.<br>A01G18/20<br>ADD.<br>A01G18/22 |
| X<br>A | JP 7 263612 B1 (DENKA CO LTD; NAGANOKEN NOSON KOGYO KENKYUSYO)<br>24 April 2023 (2023-04-24)<br>* paragraphs [0040], [0041] *<br>----- | 1,2,10<br>3-9 | |
| X<br>A | JP 2006 149257 A (KYOWA CHEM IND CO LTD)<br>15 June 2006 (2006-06-15)<br>* paragraphs [0001] - [0010] *<br>----- | 1,2<br>3-10 | |
| X<br>A | JP H08 322381 A (HOKUTO SANGYO KK)<br>10 December 1996 (1996-12-10)<br>* paragraphs [0001] - [0016] *<br>----- | 1,2<br>3-10 | |
| | | | TECHNICAL FIELDS SEARCHED (IPC) |
| | | | A01G |

The present search report has been drawn up for all claims

3

| Place of search | Date of completion of the search | Examiner |
|---|---|---|
| The Hague | 6 January 2025 | Spitz, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 19 9639

This annex lists the patent family members relating to the patent documents cited in the above-mentioned European search report. The members are as contained in the European Patent Office EDP file on
The European Patent Office is in no way liable for these particulars which are merely given for the purpose of information.

06-01-2025

| Patent document cited in search report | | Publication date | Patent family member(s) | | | Publication date |
|---|---|---|---|---|---|---|
| CN 114258264 | A | 29-03-2022 | CN | 114258264 | A | 29-03-2022 |
| | | | EP | 4019623 | A1 | 29-06-2022 |
| | | | JP | 7503065 | B2 | 19-06-2024 |
| | | | JP | WO2021033458 | A1 | 25-02-2021 |
| | | | US | 2022279735 | A1 | 08-09-2022 |
| | | | US | 2024251721 | A1 | 01-08-2024 |
| | | | WO | 2021033458 | A1 | 25-02-2021 |
| JP 7263612 | B1 | 24-04-2023 | JP | 7263612 | B1 | 24-04-2023 |
| | | | JP | 2024089700 | A | 04-07-2024 |
| | | | TW | 202425795 | A | 01-07-2024 |
| | | | WO | 2024135119 | A1 | 27-06-2024 |
| JP 2006149257 | A | 15-06-2006 | NONE | | | |
| JP H08322381 | A | 10-12-1996 | JP | 2673796 | B2 | 05-11-1997 |
| | | | JP | H08322381 | A | 10-12-1996 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001178264 A